# EUROPEAN PATENT SPECIFICATION

(11) **EP 4 059 190 B1**
(45) Date of publication and mention of the grant of the patent: **02.07.2025**
(21) Application number: 20793410.0
(22) Date of filing: 27.10.2020
(51) Int. Cl.: H04L 41/5041, H04L 41/0806, H04L 41/5022

(54) **METHOD OF CONFIGURING A TELECOMMUNICATIONS NETWORK**
VERFAHREN ZUR KONFIGURATION EINES TELEKOMMUNIKATIONSNETZES
PROCÉDÉ DE CONFIGURATION D'UN RÉSEAU DE TÉLÉCOMMUNICATIONS

(30) Priority: 13.11.2019 EP 19208945
(43) Date of publication of application: 21.09.2022
(73) Proprietor: British Telecommunications public limited company, London E1 8EE (GB)
(72) Inventor: BROWN, Ruth, London EC4V 5BT (GB); GHASSEMIAN, Mona, London EC4V 5BT (GB)
(74) Representative: British Telecommunications public limited company Intellectual Property Department
(86) International application number: PCT/EP2020/080129
(87) International publication number: WO 2021/094083

(56) References cited:
- EP-A2- 2 071 882
- US-A1- 2015 120 293
- US-A1- 2017 367 036
- GOKHALE VINEET ET AL: "On QoS-compliant telehaptic communication over shared networks", COMPUTER NETWORKS, ELSEVIER, AMSTERDAM, NL, vol. 165, 28 September 2019 (2019-09-28), XP085920401, ISSN: 1389-1286, [retrieved on 20190928], DOI: 10.1016/J.COMNET.2019.106935
- ZHENG SHAOPING ET AL: "Virtual machine migration techniques for managing time-varied workloads", 2014 13TH INTERNATIONAL CONFERENCE ON OPTICAL COMMUNICATIONS AND NETWORKS (ICOCN), IEEE, 9 November 2014 (2014-11-09), pages 1 - 5, XP032709155, DOI: 10.1109/ICOCN.2014.6987084
- NOKIA ET AL: "Slice Selection solution update", vol. SA WG2, no. Nanjing, P.R. China; 20160523 - 20160527, 27 May 2016 (2016-05-27), XP051116569, Retrieved from the Internet <URL:http://www.3gpp.org/ftp/tsg_sa/WG2_Arch/TSGS2_115_Nanjing_China/Docs/> [retrieved on 20160527]

## Description

### Field of Invention

The present invention relates to a method of configuring a telecommunications network.

### Background

The standard of service that is expected or tolerable from a telecommunications network may vary for different users. In one aspect, this is because certain users are less sensitive to (at least, in the sense of perceiving) lower standards of service than other users, and *vice versa.* Variation in this degree of sensitivity may be particularly pronounced in relation to telehaptics (*i.e.* the use of a telecommunications network to communicate, to appropriate apparatus, the generation of tactile sensations to users) or for other telecommunication experiences that rely on sensory responses.

For example, due to humans' sensitivity to asynchronicity between sensory inputs, such as between visual and/or aural inputs versus tactile inputs, telehaptic applications require especially low latencies for the full duration of the telehaptic session. However, not all users have the same sensitivity to such sensory asynchronicity, and therefore not all users have the same latency requirements. In one such example, a visually-impaired individual may have a higher sensitivity to asynchronicity between tactile and aural inputs compared to a user who does not have any visual impairment.

To deliver the same level of service (e.g. for telehaptics) irrespective of the variation in users' sensitivity to their level of service may, on the one hand, constitute an inefficient use of network resources for some users, and, on the other hand, may result in an unsatisfactory (or even unfair) level of service for other users.

It is therefore an aim of the present invention at least to alleviate some of the aforementioned problems.

US2017367036 discloses an NR network slicing architecture that is used to facilitate network slice discovery and selection.

US2015120293 discloses a system that receives user speech captured at a second end user device during a communication session between the second end user device and a first end user device, applies speech recognition to the user speech, identifies an unclear word in the user speech based on the speech recognition, adjusts the user speech to generate adjusted user speech by replacing all or a portion of the unclear word with replacement audio content, and provides the adjusted user speech to the first end user device during the communication session.

### Statements of Invention

According to a first aspect of the invention, there is provided a method of configuring a telecommunications network, the method comprising the steps of: identifying a User Equipment (UE) utilising the telecommunications network; ascertaining physical capability information associated with a user of the identified UE wherein the physical capability information is indicative of a physical capability of the user; determining a network configuration in dependence upon the ascertained physical capability information; and configuring a network connection for the identified UE according to the determined network configuration.

As used herein, the term "physical capability information" preferably connotes an indicator or a measure of an extent to which a user of the UE is capable of detecting, processing and/or responding to a stimulus from the UE (and/or an apparatus that is in communication with the UE) in an accurate and timely manner (i.e. a "physical capability").

Preferably, the network configuration is determined so as to improve or to maintain a quality of experience for the user in dependence upon the ascertained physical capability information. Optionally, the network connection is determined so as to increase or to decrease utilisation of network resources for the network connection. Optionally, configuring the network connection is performed in dependence upon identifying that the network configuration for the identified UE is unsuitable, for example in dependence upon said determined network configuration.

Optionally, identifying the UE comprises identifying a unique identifier of the UE, such as a network address. Optionally, the association of a network configuration and physical capability information is predefined. Optionally, the UE is a telehaptic device and/or is communicatively connected to at least one telehaptic device. Optionally, the determined network configuration is a reconfiguration, and said method is a method of reconfiguring a telecommunications network.

Preferably, the method further comprises the step of identifying an application that the identified UE is, or will be, engaged over the telecommunications network. Optionally, the method is performed (and may only be performed) in response to identifying that the application is a telehaptic application. Optionally, the method is performed in response to identifying that the application is an application for media streaming and/or remote control. Optionally, the network configuration is further determined in dependence upon the identified application.

Preferably, the physical capability information is uniquely associated with the identified UE and/or a uniquely identified user of the UE (such as by means of a user account). Preferably, the physical capability information is indicative of an impairment of the user of the UE. Preferably, the physical capability information is indicative of a heightened skill of the user of the UE.

Preferably, the physical capability information is ascertained by the telecommunications network, and more preferably by a core of the telecommunications network. The physical capability information may be ascertained by the UE and/or by a server that is remote to the telecommunications network. Optionally, the physical capability information is ascertained from information provided by: the user of the UE; the UE; a remote server that is in communication with the UE; and/or the telecommunications network. Preferably, the physical capability information is ascertained from a flag that is communicated from the identified UE. Optionally, the physical capability information is available to be selected by the user.

Preferably, the physical capability information is ascertained from an identity of hardware and/or software operating on the UE. Optionally, the method further comprises the step of identifying hardware and/or software of the UE. Optionally, said hardware and/or software is configured to improve user accessibility (such as for users having an impairment or heightened skill). Optionally, the identity of hardware and/or software may include a configuration for said hardware and/or software, and said configuration may be for improving user accessibility. Optionally, the identity of software operating on the UE includes a configuration of the software, and for example user settings and/or preferences, and the user settings and preferences may be user accessibility options. Optionally, the physical capability information is ascertained from an identity of hardware and/or software operating on a peripheral device that is in communication with the UE, wherein the peripheral device may be a telehaptic device.

Preferably, the physical capability information is ascertained from user information that is associated with the UE. Optionally, the user information is associated with the UE as part of a user account or profile (which may include a unique and/or secure user account or profile). Optionally, the UE is available for use by a plurality of user accounts, each user account having associated with it user information.

Preferably, the physical capability information is ascertained from inputs received from the UE. Optionally, said inputs are measured so as to derive a measure of a physical capability of a user of the UE, and may include a speed and/or accuracy of such inputs. Optionally, said inputs are measured by means of keylogging.

Preferably, the physical capability information further comprises a grading that is indicative of a level of a physical capability, and wherein the network configuration is determined so as to achieve a level of network performance for the UE in dependence on said grading. Preferably, the physical capability information is associated with a unique Personal Area Network (PAN) that is accessed by the UE, wherein the physical capability information for the UE is identified from the identity of the Personal Area Network.

Preferably, the step of determining the network connection, and preferably configuring the network connection, is performed so as to improve network performance of the network connection for the identified UE, and more preferably, only for the identified UE. Optionally, the network performance includes latency, jitter, and/or bandwidth. Optionally, at least one network configuration is associated with the ascertained physical capability information, and the network configuration is determined based on a cost (for example, a monetary and/or processing cost) associated with each network configuration, and wherein the telecommunications network is configured to minimise said cost when effecting the network configuration.

Preferably, the step of determining the network connection, and preferably configuring the network connection, is performed so as to reduce network performance of the network connection for the identified UE, and more preferably, only for the identified UE. Preferably, the network configuration comprises changing a network slice onto which the **UE** is allocated.

Preferably, the network configuration comprises: moving a network resource that is to be accessed by the UE closer to, or further away from, the UE; increasing or decreasing the priority of a network communication to and/or from the UE; and increasing or decreasing processing resources allocated to processing a network communication to and/or from the UE. As used herein, reference to "closer to, or further away from, the UE" preferably connotes topological distance in a networking sense, for example as to the number of nodes in a connection.

Preferably, the method further comprises the step of subsequently reversing the network configuration. Preferably, said reversing is performed upon detecting termination of the identified application or in response to a user input.

Preferably, the method further comprises the step of ascertaining an eligibility of the identified UE to have the network connection of the UE configured in dependence upon the associated physical capability information, and wherein said configuring is performed in response to identifying that the UE is eligible. Optionally, said eligibility is determined by means of a flag, and the flag may be stored on the UE and/or in the telecommunications network in association with the UE. Optionally, said eligibility is available to be user-controlled.

According to another aspect of the invention, there is provided a telecommunications network comprising: a processor for: identifying a User Equipment (UE) utilising the telecommunications network; ascertaining physical capability information associated with a user of the identified UE; and determining a network reconfiguration in dependence upon the ascertained physical capability information; and an orchestrator for configuring a network connection for the identified **UE** according to the determined network configuration.

As used throughout, the word 'or' can be interpreted in the exclusive and/or inclusive sense, unless otherwise specified.

The invention extends to a method of configuring a telecommunications network and to a telecommunications network as described herein and/or substantially as illustrated with reference to the accompanying drawings. The present invention is now described, purely by way of example, with reference to the accompanying diagrammatic drawings, in which:
Figure 1 is a schematic diagram of an exemplary telecommunications network; and
Figure 2 shows a process for configuring the telecommunications network.

### Specific Description

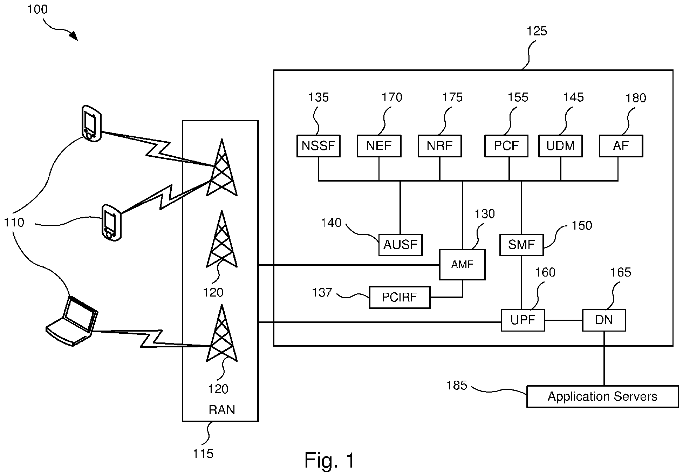

Figure 1 shows an exemplary telecommunications network 100. The network 100 is, in this example, a mobile cellular network comprising a plurality of User Equipment (UEs) 110 (*e.g.* in the form of a mobile cellular device, a laptop, a tablet, a smart wearable device, an 'Internet of Things' device, or a connected implant or medical aid). Each UE 110 is configured to utilise the telecommunications network 100 by accessing a Radio Access Network (RAN) 115, as provided by a RAN access point *120 (e.g.* in the form of a macro-, micro-, pico- or femto-cell site). In turn, the RAN access point 120 is connected to a core of the network 125.

In one example, the UEs 110 are communication devices that have telehaptic-capabilities and/or that are in turn associated with a peripheral haptic device for causing physical interaction with a subject (such as a 'telesurgery', 'teleoperation', 'telerehabilitation' or 'telepresence' robot or device), and therefore comprise one or more of a: motor; actuator; heater; cooler; electrical generator; fan; compressor; and speaker (e.g. an ultrasound generator).

The core network 125 comprises the following functional components:
- Access and Mobility management Function (AMF) 130;
- Network Slice Selection Function (NSSF) 135;
- Physical Capability Information Reconfiguration Function (PCIRF) 137;
- AUthentication Server Function (AUSF) 140;
- Unified Data Management (UDM) 145;
- Session Management Function (SMF) 150;
- Policy Control function (PCF) 155;
- User Plane Function (UPF) 160;
- Data Network (DN) 165;
- Network Exposure Function (NEF) 170;
- Network Repository Function (NRF) 175; and
- Application Function (AF) 180.

By means of the telecommunications network 100, each UE 110 is capable of accessing application servers 185, which provide, for example, a telehaptic service to a UE 110.

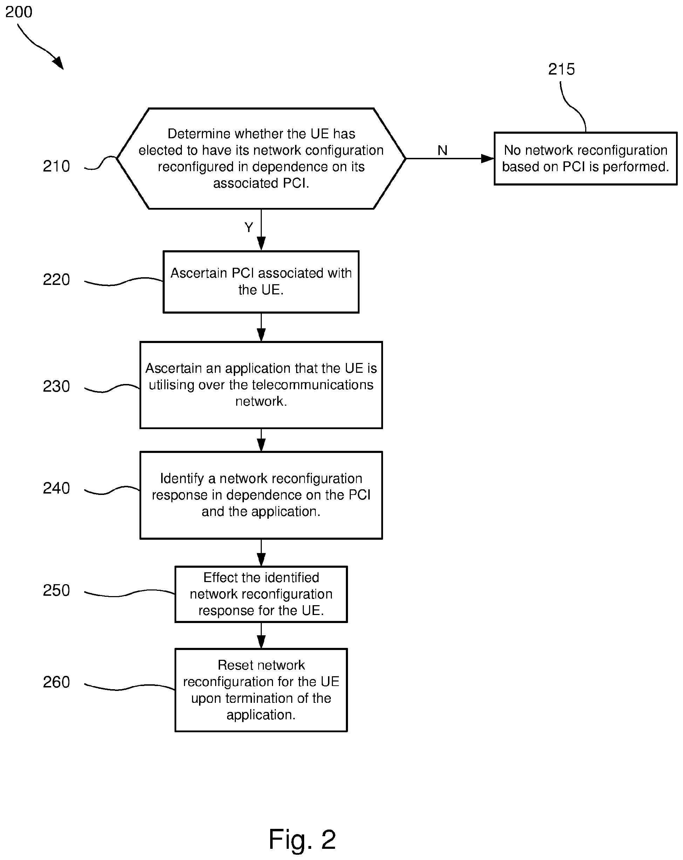

The network 100 is further configured to reconfigure a network connection for a given UE 110 in dependence upon "Physical Capability Information" (PCI) associated with the given UE so as to provide a network connection that is suited to (and proportionate to) the capabilities of a user of the UE. The network connection may be improved or reduced, but, at least, without detriment to the quality of experience for that user (to the extent that the user is capable of perceiving the quality of an experience, as informed by the PCI). In this way, network resource utilisation may be improved, as well as the quality of service and/or experience that is delivered to a user. Figure 2 illustrates a process 200 of performing such reconfiguration.

Individuals detect stimuli by means of their senses (which may or may not be augmented by means of aids, such as a hearing aid). Such senses include senses for: tactile sensation, including force, touch and/or temperature; visual inputs; aural (or acoustic) inputs; chemical inputs (olfactory and/or taste); and/or orientation and/or equilibrium (or balance).

The extent to which an individual is capable of perceiving and then appropriately reacting to a stimulus varies, and is determined, not least, by an individual's physical capabilities. As used herein, the term "physical capabilities" is used to refer to characteristics of an individual that affect the extent to which they are able to detect, process and/or respond to a stimulus in an accurate and timely manner. A user's physical capabilities may be quantified or qualified as "Physical Capability Information" (PCI), and such information is accessible by the telecommunications network to determine a suitable reconfiguration for a network connection.

The process 200 commences at a first step 210, in which the telecommunications network 100 (specifically, the core network 125) identifies whether a given UE 110 has been elected to participate in the ensuing steps of the process 200, as identified, for example, from a table that maps a unique identity of a UE (for example, an International Mobile Subscriber Identifier) to a flag indicating whether or not this UE has opted in. If a UE is not opted in, then the process ends without performing network reconfiguration based on PCI 215. In one example (not shown in Figure 2), a communication is issued to the UE to provide the option of opting into the process 200, and the process resets upon receiving a response to the communication.

If, however, the UE has elected to participate in the process 200, the process continues to a next step in which the PCI associated with the UE is ascertained 220.

For brevity, reference is herein made to PCI being associated with a given UE, but it will be appreciated that the PCI is available to be associated with another UE that communicates with the given UE, and/or with a user (for example, by means of a unique user account or profile) that is in turn associated with the given UE.

In one example, PCI is ascertained from parameters including:
- **an indicator** flag that is communicated to (and/or stored in) the telecommunications network 100, the indicator flag identifying a status, qualifier, health condition or impairment, and the indicator flag indicates that a user has, for example one or more of:
   ▪ an impairment, e.g. to their hearing, mobility and/or vision; and
   ▪ a heightened sense or perception, such as a musician having a heightened sense of hearing;
- hardware and/or software preferences and settings that are indicative of a particular physical capability, and for example include accessibility settings, such as a preference to use one or more of:
   ∘ closed captions; and
   ∘ contrast, brightness, colour, textual modifications (size, emboldening, etc.) and voice or audio descriptions to assist with visual impairment;
- a type, or an identity, of software and/or hardware associated with the UE that is/are indicative of a particular physical capability, including:
   ∘ assistive technology, such as for a hearing aid and/or mobile accessibility software and/or hardware; and
   ∘ professional software and/or hardware that is indicative of a highly capable user, such as music composition software or equipment or a robot for telesurgery;
- personal information associated with a user of the UE from which an extent of physical capabilities may be inferred, such as one or more of:
   ∘ age;
   ∘ gender; and
   ∘ body mass index;
- and metrics based on inputs received from the UE from which an extent of physical capabilities may be inferred, such as:
   o a level of accuracy of user inputs into a UE and/or a reaction time of user inputs into a UE (e.g. as identified by means of key logging).

In one example, a selection of the aforementioned parameters is stored in the UE 110, an application server 185 and/or a portion of the core network 125.

The PCI is then derived, for a given UE, from the stored parameters, as performed by the UE 110, an application server 185 and/or a portion of the core network 125. The PCI for a given UE is communicated to the PCIRF 137 and stored in a table; an exemplary such table is shown in Table 1 below.

**Table 1**

| **UE Identifier** | **PCI** |
|---|---|
| 135768800000000 | Visual impairment |
| 255768800000340 | Auditory impairment |
| 255768800000777 | Enhanced auditory capability |
| 235768815000340 | Mobility impairment |
| 126543321546123 | Telesurgeon |
| 546432135454652 | Skilled operator |

Once the PCI for a given UE 110 has been ascertained in step 220, the process 200 continues to step 230 to ascertain the application that the UE is utilising over the telecommunications network. This is, for example, ascertained from the identity of an application server 185 that the UE is accessing (for example from network address information). The type of application is then communicated to the PCIRF 137 and uniquely associated with the UE for the duration of the UE's session.

Accordingly, by step 230, the PCIRF has knowledge of, for a given UE 110, the PCI and the application that the UE is running or in which the UE is otherwise engaged. The PCIRF thereby identifies, at step 240, an appropriate network reconfiguration for a UE, given its PCI and the application in which it is engaged. To do so, the PCIRF 137 comprises a database in which network reconfigurations that are to be performed for a given PCI, and for a given UE, engaged in a particular application, are pre-defined; Table 2 below shows (a non-exhaustive) exemplary set of such mappings.

The mappings are determined so as at least to maintain (including to improve) a quality of experience for a user by changing the performance of the network connection (including reducing that performance).

**Table 2**

| **PCI** | **Application** | **Network performance requirement** | **Network reconfiguration** |
|---|---|---|---|
| **Mobility impairment** | Remote telehaptic training or therapy | Lower latency and higher bandwidth | Move to a Ultra-Reliable, Low-Latency Connection (URLLC) network slice |
| | Video media streaming | *None* | *None* |
| **Visual impairment** | Remote / online auction | Lower latency | Move to a URLLC network slice |
| | Remote telehaptic training or therapy | Lower latency and higher bandwidth | Move to a URLLC network slice |
| | Video media streaming | Lower bandwidth | Throttle-down bandwidth |
| | Navigation system | Lower latency and higher bandwidth | Move to a URLLC network slice |
| **Auditory impairment** | Remote telehaptic training or therapy | Lower latency and higher bandwidth | Move to a URLLC network slice |
| | Remote telehaptic machinery operation | Lower latency | Move to a URLLC network slice |
| **Enhanced auditory perception** | Remote telehaptic training or therapy | *None* | *None* |
| | Online orchestra | Lower latency and higher bandwidth | Move to a URLLC network slice |
| **Skilled operator** | Remote telehaptic machinery operation | Lower latency | Move to a URLLC network slice |
| | Online multiplayer gaming | Lower latency and higher bandwidth | Move to a URLLC network slice |
| **Motion sickness (or kinesia) sufferer** | Video media streaming | Higher bandwidth | Throttle-up bandwidth |

For example, as shown in *Table 2* above, a PCI that is indicative of a user having enhanced auditory perception (such as a highly-skilled musician) is associated with a requirement for low latency and high bandwidth network performance when a UE, being associated with such a PCI, is engaged in an application to perform as part of an online orchestra. The reasoning for this network performance requirement is owed to the presumption that a user having enhanced auditory perception and engaging in an online orchestra is - to a greater extent than users not having such enhanced auditory perception - sensitive to, for example, detecting delays in sound.

In another example, a PCI that is indicative of visual impairment is associated with a requirement to lower bandwidth when engaging in video media streaming; this is with the aim of improving network resource efficiency (both across the network as a whole and for individual users), but without reducing the quality of experience for the user. In contrast, when the network is used for remote telehaptic training or therapy (*e.g.* 'telerehabilitation'), a requirement is recorded to lower latency and to increase bandwidth, given the general sensitivity to asynchronicity between touch and other senses and to the high volume of data that is demanded of telehaptics, respectively.

In the example in Table 2 of throttling-up bandwidth for video media streaming, where PCI indicates a motion sickness (or kinesia) sufferer, relief from such a condition may be realised by the process of network reconfiguration.

Although not shown in Table 2, the "Network performance requirement" is available to be quantified, such that, for example, a specific target value of latency (*e.g.* less than 1ms) is provided.

In turn, a given mapping of PCI, application and network performance requirement is further mapped to a specific network reconfiguration response so as to achieve the desired network performance requirement. In the example of a PCI indicating enhanced auditory perception and associated with a UE engaging in an online orchestra, the prescribed network reconfiguration response is to re-allocate the UE to an appropriate Ultra-Reliable, Low-Latency Communication (URLLC) network slice so as to effect the requirement of a lower latency and higher bandwidth.

In another example, where there is a requirement to lower bandwidth, the network is reconfigured by throttling down (but no less than a pre-defined threshold) a bandwidth allowance allocated to the UE.

In another example, the network reconfigurations that are available to be performed include:
- changing the network or a part thereof (*e.g.* a wireless wide area cellular network, a fixed-line network or wireless local area network) over which the UE accesses network resources;
- changing a path of a network communication from and/or to a UE 110, including re-routing network communications and/or instructing the UE to access the network via a different Radio Access Point;
- changing the location, within the network 100, of a resource that the UE is accessing, for example moving resources closer to the network edge, and in particular to a RAN access point 120 used by the UE; and/or
- increasing or decreasing the priority with which a network communication associated with the UE is handled by the network.

Accordingly, at step 240 an appropriate network reconfiguration response is determined, which is then effected by the telecommunications network 100 at step 250.

**If** an application cannot be identified, or has not yet been associated with a PCI, network performance requirement and/or network reconfiguration response, then a default network performance requirement and a corresponding default network reconfiguration response is provided and effected by the telecommunications network, and such defaults are available to prescribe no performance requirement and/or network reconfiguration.

Upon termination of a session for which the network was reconfigured at step 250, the network resets the network configuration for the UE 260.

### Alternatives and Modifications

In the aforementioned, the telecommunications network 100 is generally shown and described as a cellular wide area network (and specifically in accordance with 5G technology). However, in one alternative the telecommunications network 100 is any kind of telecommunications network, including a wired network, a local area network, a satellite network, or combination of network types (or a 'HetNet').

With reference to the process 200 of Figure 2, in an alternative, the step of ascertaining the application that the UE is engaged is optional, and available to be omitted such that the process continues directly from step 220 to step 240, and the step of identifying the network reconfiguration response 240 is performed independently of the application that the UE is running or in which the UE is engaged.

In one example, the PCI includes an extent value that is indicative of an extent of a user's physical capability. For example, in the context of visual impairment, the extent is an indication that the visual impairment is: near-normal; mild; moderate; severe; profound; near-total; or total. In such an example, the network configuration response is performed in dependence upon the extent value, such that a more significant network configuration response is available to be taken where the extent value warrants such a response.

In one example, for a given UE, the PCI is available to be static or dynamic, such that is updated at pre-defined intervals or based on pre-determined events.

In an alternative, a common set of PCI is allocated to a plurality of UEs within a given Personal Area Network (PAN), which is available to help reduce the extent of signalling required to ascertain PCI for a given device.

In one example, the UE is connected to a plurality of telehaptic devices, and PCI is associated with the UE in dependence on which telehaptic device is being used by the UE.

## Claims

1. A method (200) of configuring a telecommunications network (100), the method comprising the steps of:
identifying a User Equipment (110), UE, utilising the telecommunications network;
ascertaining physical capability information associated with a user of the identified UE, wherein the physical capability information is indicative of a physical capability of the user (220);
determining a network configuration in dependence upon the ascertained physical capability information (240); and
configuring a network connection for the identified UE according to the determined network configuration (250).

2. A method according to Claim 1, wherein the network configuration is determined so as to improve or to maintain a quality of experience for the user in dependence upon the ascertained physical capability information.

3. A method according to Claim 1 or 2, wherein the network configuration is determined so as to reduce network performance of the network connection for the identified UE (110) in dependence upon the ascertained physical capability information.

4. A method according to any preceding claim, wherein the network connection is determined so as to reduce utilisation of network resources for the network connection.

5. A method according to Claim 1 or 2, wherein the network connection is determined so as to improve network performance of the network connection for the identified UE in dependence upon the ascertained physical capability information.

6. A method according to Claim 1, 2 or 5, wherein the network connection is determined so as to increase utilisation of network resources for the network connection.

7. A method according to any preceding claim, wherein the physical capability information is indicative of an impairment of the user of the UE (110) and/or of a heightened skill of the user of the UE.

8. A method according to any preceding claim, wherein the physical capability information is ascertained by the telecommunications network (100).

9. A method according to any preceding claim, wherein the physical capability information is ascertained from: an identity of hardware and/or software operating on the UE (110); user information that is associated with the UE; and/or inputs received from the UE.

10. A method according to any preceding claim, further comprising the step of identifying an application (230) that the identified UE (110) is, or will be, engaged over the telecommunications network (100).

11. A method according to Claim 10, wherein the method is performed in response to identifying that the application is a telehaptic application.

12. A method according to Claim 10 or 11 wherein the network configuration is further determined in dependence upon the identified application.

13. A method according to any preceding claim, wherein the physical capability information further comprises a grading that is indicative of a level of a physical capability, and wherein the network configuration is determined so as to achieve a level of network performance for the UE (110) in dependence on said grading.

14. A method according to any preceding claim, wherein the network configuration comprises: moving a network resource that is to be accessed by the UE (110) closer to, or further away from, the UE; increasing or decreasing the priority of a network communication to and/or from the UE; and increasing or decreasing processing resources allocated to processing a network communication to and/or from the UE.

15. A telecommunications network (100) comprising:
a processor (137) for: identifying a User Equipment (110), UE, utilising the telecommunications network; ascertaining physical capability information associated with a user of the identified UE (220); and determining a network configuration in dependence upon the ascertained physical capability information (240); and
an orchestrator for configuring a network connection for the identified UE according to the determined network configuration (250).

## Patentansprüche

1. Verfahren (200) zum Konfigurieren eines Telekommunikationsnetzes (100), wobei das Verfahren die Schritte umfasst:
Identifizieren eines Benutzergeräts (110), UE, das das Telekommunikationsnetz nutzt;
Ermitteln von Informationen zur körperlichen Leistungsfähigkeit, die einem Benutzer des identifizierten UE zugeordnet sind, wobei die Informationen zur körperlichen Leistungsfähigkeit eine körperliche Leistungsfähigkeit des Benutzers angeben (220);
Bestimmen einer Netzkonfiguration in Abhängigkeit von den ermittelten Informationen zur körperlichen Leistungsfähigkeit (240) und
Konfigurieren einer Netzverbindung für das identifizierte UE gemäß der bestimmten Netzkonfiguration (250).

2. Verfahren nach Anspruch 1, wobei die Netzkonfiguration bestimmt wird, um eine Erfahrungsqualität für den Benutzer in Abhängigkeit von den ermittelten Informationen zur körperlichen Leistungsfähigkeit zu verbessern oder aufrechtzuerhalten.

3. Verfahren nach Anspruch 1 oder 2, wobei die Netzkonfiguration bestimmt wird, um die Netzleistung der Netzverbindung für das identifizierte UE (110) in Abhängigkeit von den ermittelten Informationen zur körperlichen Leistungsfähigkeit zu reduzieren.

4. Verfahren nach einem der vorhergehenden Ansprüche, wobei die Netzverbindung bestimmt wird, um die Nutzung von Netzressourcen für die Netzverbindung zu reduzieren.

5. Verfahren nach Anspruch 1 oder 2, wobei die Netzverbindung bestimmt wird, um die Netzleistung der Netzverbindung für das identifizierte UE in Abhängigkeit von den ermittelten Informationen zur körperlichen Leistungsfähigkeit zu verbessern.

6. Verfahren nach Anspruch 1, 2 oder 5, wobei die Netzverbindung bestimmt wird, um die Nutzung von Netzressourcen für die Netzverbindung zu erhöhen.

7. Verfahren nach einem der vorhergehenden Ansprüche, wobei die Informationen zur körperlichen Leistungsfähigkeit eine Beeinträchtigung des Benutzers des UE (110) und/oder eine erhöhte Fertigkeit des Benutzers des UE angeben.

8. Verfahren nach einem der vorhergehenden Ansprüche, wobei die Informationen zur körperlichen Leistungsfähigkeit durch das Telekommunikationsnetz (100) ermittelt werden.

9. Verfahren nach einem der vorhergehenden Ansprüche, wobei die Informationen zur körperlichen Leistungsfähigkeit ermittelt werden aus: einer Identität von Hardware und/oder Software, die auf dem UE (110) arbeitet; Benutzerinformationen, die dem UE zugeordnet sind; und/oder Eingaben, die vom UE empfangen werden.

10. Verfahren nach einem der vorhergehenden Ansprüche, ferner umfassend den Schritt des Identifizierens einer Anwendung (230), mit der das identifizierte UE (110) über das Telekommunikationsnetz (100) beschäftigt ist oder sein wird.

11. Verfahren nach Anspruch 10, wobei das Verfahren als Reaktion auf das Identifizieren durchgeführt wird, dass die Anwendung eine telehaptische Anwendung ist.

12. Verfahren nach Anspruch 10 oder 11, wobei die Netzkonfiguration ferner in Abhängigkeit von der identifizierten Anwendung bestimmt wird.

13. Verfahren nach einem der vorhergehenden Ansprüche, wobei die Informationen zur körperlichen Leistungsfähigkeit ferner eine Bewertung umfassen, die einen Grad einer körperlichen Leistungsfähigkeit angibt, und wobei die Netzkonfiguration bestimmt wird, um einen Grad an Netzleistung für das UE (110) in Abhängigkeit von der Bewertung zu erreichen.

14. Verfahren nach einem der vorhergehenden Ansprüche, wobei die Netzkonfiguration umfasst: Bewegen einer Netzressource, auf die durch das UE (110) zugegriffen werden soll, näher an das oder weiter weg von dem UE; Erhöhen oder Verringern der Priorität einer Netzkommunikation an das und/oder von dem UE und Erhöhen oder Verringern von Verarbeitungsressourcen, die zum Verarbeiten einer Netzkommunikation an das und/oder von dem UE zugeordnet sind.

15. Telekommunikationsnetz (100), das umfasst:
einen Prozessor (137) zum: Identifizieren eines Benutzergeräts (110), UE, das das Telekommunikationsnetz nutzt; Ermitteln von Informationen zur körperlichen Leistungsfähigkeit, die einem Benutzer des identifizierten UE (220) zugeordnet sind; und Bestimmen einer Netzkonfiguration in Abhängigkeit von den ermittelten Informationen zur körperlichen Leistungsfähigkeit (240); und
einen Orchestrator zum Konfigurieren einer Netzverbindung für das identifizierte UE gemäß der bestimmten Netzkonfiguration (250).

## Revendications

1. Procédé (200) de configuration d'un réseau de télécommunications (100), le procédé comprenant les étapes suivantes :
identification d'un équipement utilisateur (110), UE, utilisant le réseau de télécommunications ;
vérification d'informations de capacité physique associées à un utilisateur de l'UE identifié, les informations de capacité physique étant indicatives d'une capacité physique de l'utilisateur (220) ;
détermination d'une configuration de réseau en fonction des informations de capacité physique vérifiées (240) ; et
configuration d'une connexion au réseau pour l'UE identifié en fonction de la configuration de réseau déterminée (250).

2. Procédé selon la revendication 1, dans lequel la configuration de réseau est déterminée de manière à améliorer ou maintenir une qualité d'expérience pour l'utilisateur en fonction des informations de capacité physique vérifiées.

3. Procédé selon la revendication 1 ou 2, dans lequel la configuration de réseau est déterminée de manière à réduire les performances de réseau de la connexion au réseau pour l'UE identifié (110) en fonction des informations de capacité physique vérifiées.

4. Procédé selon l'une quelconque des revendications précédentes, dans lequel la connexion au réseau est déterminée de manière à réduire l'utilisation des ressources du réseau pour la connexion au réseau.

5. Procédé selon la revendication 1 ou 2, dans lequel la connexion au réseau est déterminée de manière à améliorer les performances de réseau de la connexion au réseau pour l'UE identifié en fonction des informations de capacité physique vérifiées.

6. Procédé selon les revendications 1, 2 ou 5, dans lequel la connexion au réseau est déterminée de manière à augmenter l'utilisation des ressources du réseau pour la connexion au réseau.

7. Procédé selon l'une quelconque des revendications précédentes, dans lequel les informations de capacité physique sont indicatives d'une déficience de l'utilisateur de l'UE (110) et/ou d'une compétence accrue de l'utilisateur de l'UE.

8. Procédé selon l'une quelconque des revendications précédentes, dans lequel les informations de capacité physique sont vérifiées par le réseau de télécommunications (100).

9. Procédé selon l'une quelconque des revendications précédentes, dans lequel les informations de capacité physique sont vérifiées à partir : d'une identité du matériel et/ou du logiciel fonctionnant sur l'UE (110) ; d'informations sur l'utilisateur associées à l'UE ; et/ou d'entrées reçues de l'UE.

10. Procédé selon l'une quelconque des revendications précédentes, comprenant en outre l'étape consistant à identifier une application (230) que l'UE identifié (110) utilise, ou utilisera, sur le réseau de télécommunications (100).

11. Procédé selon la revendication 10, dans lequel le procédé est exécuté en réponse à l'identification du fait que l'application est une application téléhaptique.

12. Procédé selon la revendication 10 ou 11, dans lequel la configuration de réseau est en outre déterminée en fonction de l'application identifiée.

13. Procédé selon l'une quelconque des revendications précédentes, dans lequel les informations de capacité physique comprennent en outre un classement indiquant le niveau d'une capacité physique, et dans lequel la configuration de réseau est déterminée de manière à atteindre un niveau de performance du réseau pour l'UE (110) en fonction dudit classement.

14. Procédé selon l'une quelconque des revendications précédentes, dans lequel la configuration de réseau comprend : le déplacement d'une ressource du réseau à laquelle l'UE (110) doit accéder à une position plus proche, ou plus éloignée, de l'UE ; l'augmentation ou la diminution de la priorité d'une communication du réseau à destination et/ou en provenance de l'UE ; et l'augmentation ou la diminution de ressources de traitement allouées au traitement d'une communication du réseau à destination et/ou en provenance de l'UE.

15. Réseau de télécommunications (100) comprenant :
un processeur (137) pour : identifier un équipement utilisateur (110), UE, utilisant le réseau de télécommunications ; vérifier des informations de capacité physique associées à un utilisateur de l'UE identifié (220) ; et déterminer une configuration de réseau en fonction des informations de capacité physique vérifiées (240) ; et
un orchestrateur pour configurer une connexion au réseau pour l'UE identifié en fonction de la configuration de réseau déterminée (250).
